# EUROPEAN PATENT SPECIFICATION

(11) **EP 1 072 132 B1**
(45) Date of publication and mention of the grant of the patent: **07.11.2001**
(21) Application number: 98922704.6
(22) Date of filing: 14.04.1998
(51) Int. Cl.: H04L 27/00, H04H 1/00

(54) **DUAL-MODE RECEIVER FOR RECEIVING SATELLITE AND TERRESTRIAL SIGNALS IN A DIGITAL BROADCAST SYSTEM**
ZWEIMODENEMPFÄNGER ZUM EMPFANG VON SATELLITEN UND TERRESTRISCHEN SIGNALEN IN EINEM DIGITALRUNDFUNKSYSTEM
SYSTEME A DOUBLE MODE POUR RECEVOIR DES SIGNAUX TRANSMIS PAR SATELLITES ET DES SIGNAUX DE TERRE DANS UN SYSTEME DE DIFFUSION NUMERIQUE

(43) Date of publication of application: 31.01.2001
(73) Proprietor: FRAUNHOFER-GESELLSCHAFT ZUR FÖRDERUNG DER ANGEWANDTEN FORSCHUNG E.V., 80636 München (DE)
(72) Inventor: EBERLEIN, Ernst, D-91091 Grossenseebach (DE); BADRI, Sabah, D-91058 Erlangen (DE); LIPP, Stefan, D-91058 Erlangen (DE); BUCHHOLZ, Stephan, D-81447 München (DE); HEUBERGER, Albert, D-91056 Erlangen (DE); GERHÄUSER, Heinz, D-91344 Waischenfeld (DE)
(74) Representative: Schoppe, Fritz, Dipl.-Ing.
(86) International application number: EP9802168
(87) International publication number: WO9953660

(56) References cited:
- EP-A- 0 574 273
- EP-A- 0 769 873
- US-A- 4 355 401
- US-A- 5 600 672
- GROSHONG R ET AL: "UNDERSAMPLING TECHNIQUES SIMPLIFY DIGITAL RADIO" ELECTRONIC DESIGN, vol. 39, no. 10, 23 May 1991, pages 67-68, 70, 73 - 75, 78, XP000234611

## Description

### BACKGROUND AND SUMMARY OF THE INVENTION

The invention relates to a receiver for use in a digital broadcast system, such as the proposed digital audio radio service (DARS), which has a combined architecture for receiving both satellite signals and terrestrial signals.

US-A-5,600,672 relates to a communication system which is able to retrieve first and second data streams from a received signal at the receiver side. One of the data streams can be selected for further processing, the further processing including analog-to-digital conversion, filtering, carrier recovery, phase synchronization and decoding.

US-A-4,355,401 discloses a radio apparatus having a receiver section for receiving an analog signal and a digital angle-modulated carrier wave signal. First and second demodulators are provided for demodulating the analog and the digital signal, respectively. A decision circuit decides, in response to the output of a clock recovery circuit, whether the received signal is an analog or a digital FM wave. Depending on the decision, the demodulated analog signal or the demodulated digital signal are selectively passed by a switching means.

EP-A-0574273 shows a receiver having a combined AM-FM demodulator. The receiver has a common oscillator and mixer circuit When analog modulated signals are received, the frequency of a local oscillator of the common oscillator and mixer circuit is controlled making use of a frequency error detector. The receiver further comprises a demodulator for analog modulated signals and a demodulator for digital modulated signals which are connected in parallel. A digital modulated signal discriminator is connected to the digital modulated signal demodulator and switches the receiver to the appropriate demodulation mode.

EP-A-0769873 relates to a RF receiver adapted to receive one or more modulated signals such as quadrature amplitude modulated and vestigial side band rf input signals. A rf signal is band pass filtered and downconverted using three band pass filters and two mixers, wherein the output of the third band pass filter is applied to a sample and hold circuit The output of the sample and hold circuit is coupled via a low pass filter to an analog-to-digital converter whose output is applied to a Hilbert filter for demodulating the sampled signals and producing base-band signals.

Groshong R. et al.: "Undersampling Techniques Simplify Digital Radio", Electronic Design, vol. 39, no. 10, 23 May 1991, pp. 67 to 68, 70, 73 to 75, 78, describe a typical heterodyne receiver comprising a broadband input filter, a first IF mixer, a first IF narrowband filter, a second IF mixer having a fixed oscillation frequency, selectable second IF filters and different demodulators for AM and FM.

It is the object of the present invention to provide an apparatus and a method for receiving broadcast signals which enable reception of satellite signals and terrestrial signals using a receiver having a reduced complexity.

This object is achieved by a receiver according to claim 1 and a method according to claim 11.

The broadcast system overcomes obstructions to line of sight (LOS) satellite signal reception at fixed and mobile radio receivers by employing one or more terrestrial repeaters. The terrestrial repeaters receive a QPSK-modulated, time-division multiplexed (TDM) satellite signal, perform baseband processing of the satellite signal, and retransmit the satellite signal via multicarrier modulation (MCM). A digital filter is employed which reduces the complexity of the receiver by fulfilling the requirements of QPSK satellite signal reception, as well as operating as a downsampling filter before MCM demodulation of the terrestrial signaL

### BRIEF DESCRIPTION OF THE DRAWINGS

Fig. 1 depicts a digital broadcast system for transmitting satellite signals and terrestrial signals;
Fig. 2 is a block diagram illustrating a broadcast segment and a terrestrial repeater segment of a digital broadcast system in accordance with a preferred embodiment of the present invention;
Fig. 3 illustrates a frequency plan for satellite signals and terrestrial signals in a full-diversity broadcast system in accordance with a preferred embodiment of the present invention;
Fig. 4 is a block diagram of a receiver for satellite signals and terrestrial signals constructed in accordance with a preferred embodiment of the present invention;
Fig. 5 is a block diagram of a receiver arm for quadrature phase shift keyed (QPSK) satellite signals constructed in accordance with a preferred embodiment of the present invention;
Fig. 6 illustrates the frequency response of a surface acoustic wave (SAW) filter for satellite signals and terrestrial signals in accordance with a preferred embodiment of the present invention;
Fig. 7 illustrates the frequency response of a digital filter for satellite signals in accordance with a preferred embodiment of the present invention;
Fig. 8 is a block diagram of a receiver arm for multicarrier-modulated (MCM) terrestrial signals constructed in accordance with a preferred embodiment of the present invention;
Fig. 9 illustrates the frequency response of an MCM terrestrial signal following surface acoustic wave filtering in accordance with a preferred embodiment of the present invention;
Fig. 10 illustrates the frequency response of an MCM terrestrial signal following digital filtering in accordance with a preferred embodiment of the present invention;
Fig. 11 is a block diagram of a receiver configured to receive both QPSK satellite signals and MCM terrestrial signals; and
Fig. 12 is a block diagram of a receiver having a combined architecture for receiving and demodulating QPSK satellite signals and MCM terrestrial signals in accordance with a preferred embodiment of the present invention.

### DETAILED DESCRIPTION OF THE DRAWINGS

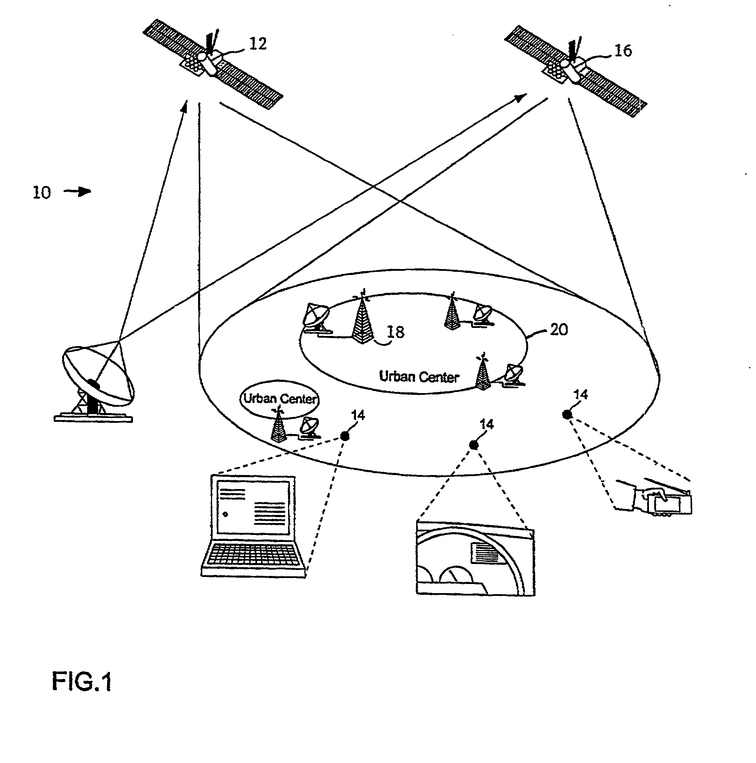

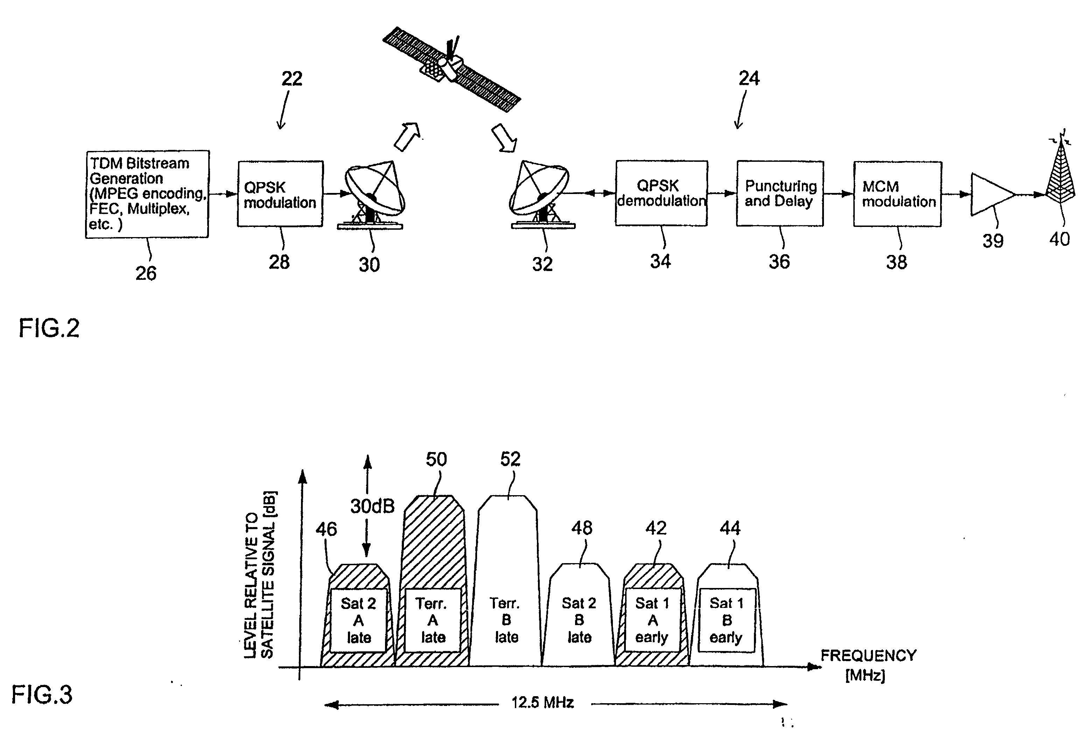

Fig. 1 depicts a digital broadcast system 10 comprising at least one geostationary satellite 12 for line of sight (LOS) satellite signal reception at radio receivers indicated generally at 14. Another geostationary satellite 16 at a different orbital position can be provided for time and/or spatial diversity purposes as discussed below in connection with Fig. 3. The system 10 further comprises at least one terrestrial repeater 18 for retransmission of satellite signals in geographic areas 20 where LOS reception is obscured by tall buildings, hills and other obstructions. The radio receiver 14 is preferably configured for dual-mode operation to receive both satellite signals and terrestrial signals and to select one of the signals as the receiver output.

The broadcast segment 22 and the terrestrial repeater segment 24 of the system 10 will now be described with reference to Fig. 2. The broadcast segment preferably includes encoding of a broadcast channel into a 3.68 Megabits per second (Mbps) time division multiplex (TDM) bit stream, as indicated in block 26. The TDM bit stream comprises 96 16 kilobits per second (kbps) prime rate channels and additional information for synchronization, demultiplexing, broadcast channel control and services. Broadcast channel encoding preferably involves MPEG audio coding, forward error correction (FEC) and multiplexing. The resulting TDM bit stream is modulated using quadrature phase shift keying (QPSK) modulation, as shown in block 28, prior to transmission via a satellite uplink 30.

With continued reference to Fig. 2, the terrestrial repeater segment comprises a satellite downlink 32 and a demodulator 34 for performing QPSK demodulation to obtain the baseband TDM bit stream. A puncturing and delay block 36 reduces the TDM bit rate from 3.68 Mbps to 3.067 Mbps by removing selected bits which can be re-inserted at the radio receiver, and also delays the entire TDM bit stream by the amount of time-diversity delay (if any) between the transmissions from the satellites 12 and 16. The delayed, reduced rate bit stream is then subjected to multicarrier modulation in block 38 prior to being amplified by amplifier 39 and transmitted from a terrestrial repeater tower 40. Multicarrier modulation preferably involves dividing the 3.067 Mbps TDM bit stream in the time domain into 432 parallel paths, each carrying 7100 bits per second. The bits are paired into two-bit symbols identified as the imaginary (I) component and real (Q) component, respectively, of a complex number. Thus, the complex symbol rate is 3550 symbols per second. The 432 parallel complex number numbers are provided as frequency coefficient inputs to a discrete inverse Fourier transform converter that is preferably implemented using a 512-coefficient inverse fast Fourier transform (IFFT) operating with 2ⁿ inputs and outputs, where n=9 and 80 input coefficients are set to zero. The output of the IFFT is a set of 432 QPSK orthogonal sine coefficients which constitute 432 narrow band, orthogonal carriers supporting a symbol rate of 3550 per second and having a symbol period of 280 microseconds.

A frequency plan for a full-diversity, two-satellite broadcast system 10 is depicted in Fig. 3. In a preferred embodiment of the system 10, the satellites 12 and 16 of Fig. 1 each broadcast the same programs A and B. The "early" satellite 12 transmits the programs A and B prior to their transmission via the "late" satellite 16. The frequency plan assigns frequency bands for each of the four QPSK-modulated satellite signals as indicated at 42,44,46 and 48, respectively, in Fig. 3. In addition, two frequency bands 50 and 52 are assigned to the multicarrier-modulated program A and B signals transmitted from the terrestrial repeaters, which retransmit the signal from the early satellite 12 with a delay sufficient to time-synchronize the signal with that transmitted by the late satellite 16. In the frequency plan, channel separation is relatively small, with each of the six frequency bands 42-52 occupying approximately 2.07 megahertz (MHz), in an overall frequency bandwidth of 12.5 MHz.

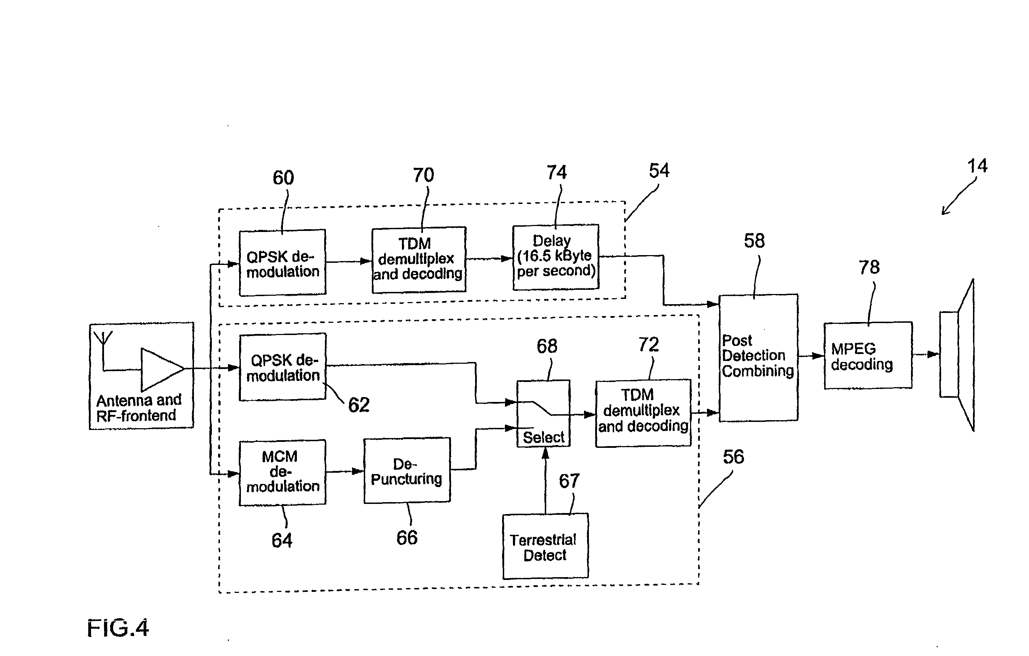

With reference to Fig. 4, a dual-mode radio receiver is illustrated which comprises a first arm 54 for receiving a QPSK signal from the early satellite 12, a second arm 56 for receiving a QPSK signal from the late satellite 16 and an MCM signal from a terrestrial repeater 18, and a combining unit 58 for generating a receiver output from two received signals. The two arms 54 and 56 allow for full diversity reception. The QPSK/MCM arm 56 of the radio receiver is implemented as a dual-mode receiver arm for satellite and terrestrial signal reception. QPSK signals received from the satellites 12 and 16 are demodulated in block 60 and 62, respectively. An MCM signal from a terrestrial repeater 18 (consisting of a delayed, multicarrier-modulated version of the signal transmitted by the early satellite 12) is also demodulated, as indicated in block 64. A depuncturing unit 66 reinserts bits into the demodulated signal from the terrestrial repeater to increase the bit rate to that of the original TDM bit stream.

The QPSK/MCM receiver arm 56 is configured to detect when a terrestrial repeater signal is present, as indicated in block 67, and selects the terrestrial repeater signal in lieu of the signal from the late satellite 16 via a selection unit 68. In a broadcast system having at least one satellite and at least one terrestrial repeater, the terrestrial signals in bands 50 and 52 of Fig. 3 can be absent or negligible when a radio receiver is in a rural area outside the range of the terrestrial repeater. If the radio receiver is mobile and in use while the user is approaching a city or urban area, both satellite and terrestrial signals can be received. If the radio receiver is mobile and in use while driving within a city, however, only the terrestrial signals can be received in many instances because no LOS signal reception from a satellite is possible. If the strength of the terrestrial signal exceeds a predetermined threshold, the dual-mode receiver arm 56 of the radio receiver switches from receiving signals from the satellite 16 to receiving signals from the terrestrial repeater 18. The QPSK demodulators 60 and 62, the MCM demodulator 64, the depuncturing unit 66, the terrestrial detection unit 67 and the selection unit 68 depicted in Fig. 4 are described in further detail below.

The signal at the output of the QPSK demodulator 60 in the receiver arm 54, and the signal at the output of the selection unit 68 in the receiver arm 56, are TDM demultiplexed and decoded, as indicated in blocks 70 and 72 in Fig. 4, to recover the baseband bit stream. As indicated in block 74, the bit stream recovered from the satellite 12 in the receiver arm 54 is delayed by the amount of delay between the broadcasts from the early satellite 12 and late satellite 16 to bring the bit stream into time synchronization with the bit stream produced by the receiver arm 56. The signals from the receiver arms 54 and 56 are then subjected to post-detection diversity combining, as indicated in block 58, prior to MPEG audio decoding in block 78. It is to be understood that a radio receiver need not support satellite diversity and therefore can be implemented with only the QPSK/MCM arm 56 and without the QPSK arm 54. In such a radio receiver, the post-detection combining unit 58 can also be omitted.

As shown in Fig. 3, the level of a terrestrial signal is substantially higher than a satellite signal and can be, for example, on the order of 30 decibels (dB) higher than the satellite signal. As stated previously, channel separation in the frequency plan is relatively small. Accordingly, filtering with high stop band attenuation is required to decode the satellite signal if a terrestrial signal is present in the adjacent channel as shown in Fig. 3. Typically, such filtering is avoided by increasing the frequency separation between the satellite and terrestrial signal channels. Channel filters are used to suppress the adjacent channel when separation is sufficient.

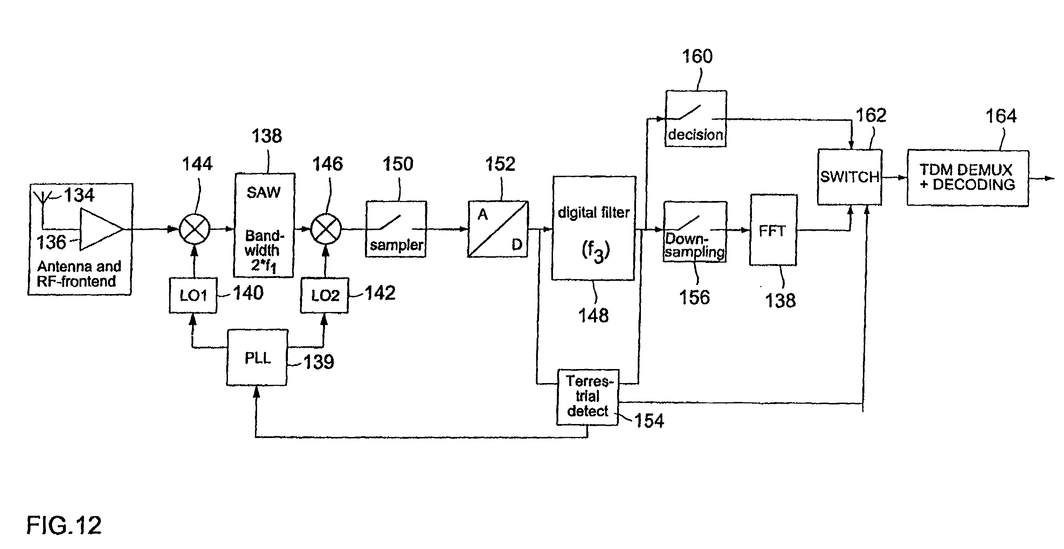

In accordance with an embodiment of the present invention, channel selection is implemented using filters which do not entirely suppress the adjacent channel. As will be discussed below, the location of the terrestrial repeater frequency bands 50 and 52 in the lower part of the frequency plan (and adjacent to the frequency bands 46 and 48, respectively, of the late satellite 16) facilitates selection of the satellite signal or the terrestrial signal for receiver output. Filtering will be described in connection with QPSK demodulation, and then in connection with MCM demodulation, before describing filtering in a combined QPSK/MCM dual-mode receiver arm (Fig. 12) constructed in accordance with the preferred embodiment of the present invention.

### QPSK Satellite Signal Demodulation

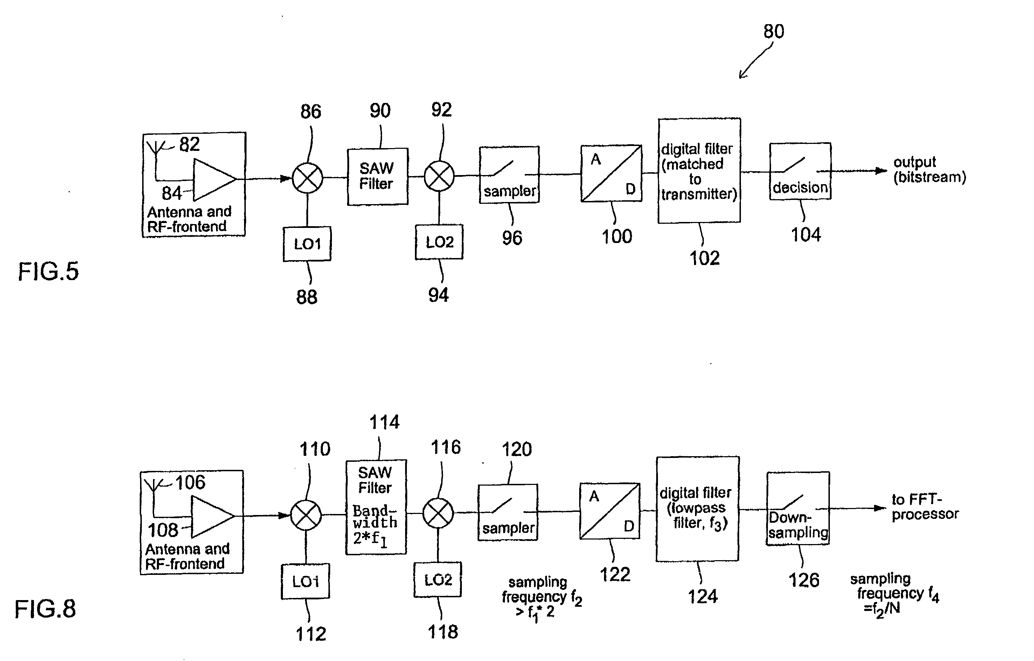

A schematic block diagram of a QPSK satellite signal receiver arm 80 is depicted in Fig. 5. An antenna 82 and low noise amplifier (LNA) 84 at the radio receiver receive a signal at a carrier frequency of approximately 2.3 gigahertz (GHz). The signal is downconverted to a first intermediate frequency (IF) of approximately 135 MHz by a mixer 86 and a local oscillator 88. Signals from the mixer 86 are provided to a low-loss surface acoustic wave (SAW) intermediate frequency (IF) filter 90 and to a second mixer 92 and local oscillator 94 for downconversion to a second IF of approximately 3.68 MHz.

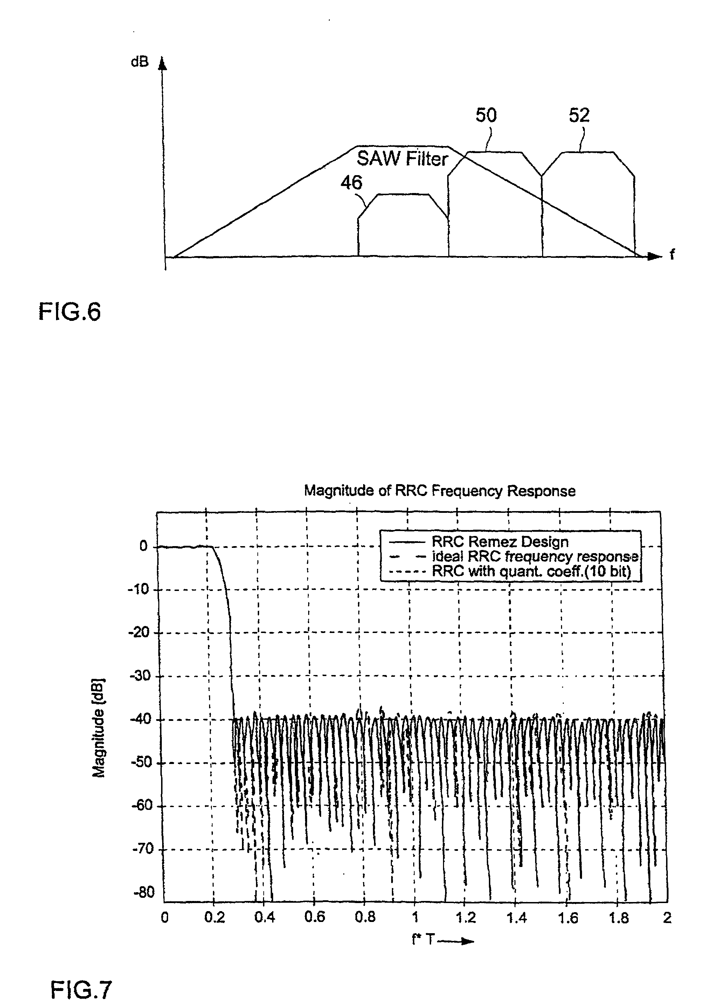

A weak or "leaky" SAW filter is preferred to a strong SAW filter having better adjacent channel suppression. As depicted in Fig. 6, a terrestrial channel 50 located directly adjacent to a satellite channel 46 is partially within the SAW filter passband and the attenuation of this interferer channel 50 is only approximately 6 dB. Although a strong SAW filter is better able to remove an adjacent channel (e.g., channel 50), a strong SAW filter can introduce phase distortion and is also more expensive to implement then a weak SAW filter.

The QPSK satellite signal arm 80 of Fig. 5 includes a sampler 96 which samples the received signal at the output of the SAW filter 90 at a sampling rate of four times the second IF. An analog-to-digital (A/D) converter 100 performs A/D conversion of the sampled signal, and a digital filter 102 removes the adjacent channel (e.g., channel 50) from the digitized satellite signal. The digital filter 102 is preferably matched to a transmitter filter at the broadcast station. The digital filter 102 may have a stopband attenuation of 30 dB or higher, depending on the SAW filter 90, and the signal-to-noise ratio (SNR) after the SAW filter 90. The output of the digital filter 102 is then processed via a sampling switch and latch device 104 to recover the TDM signal from the QPSK modulation performed at the broadcast station.

The digital filter 102 is preferably a root-raised-cosine (RRC) filter which is conventional for QPSK modulation and demodulation. In the preferred embodiment, the RRC filter has a sampling rate of 4 times the IF or 8 times the rate of the symbols transmitted in the satellite signal from the originating broadcast station. Further, a roll-off factor of α = 0.15 is selected. As shown in Fig. 7, the frequency response of the RRC filter has a passband ripple of 0.1 dB and a stopband ripple of 40 dB. Fig. 7 provides three plots representing the ideal RRC frequency response, the result of the Remez algorithm, and the RRC frequency response after coefficient quantization. Such an RRC filter specification can be fulfilled by a 136-tap, linear phase, finite impulse response (FIR) filter with a 10-bit fixed-point coefficient and a word length of 16 bits.

### MCM Demodulation of Terrestrial Signal

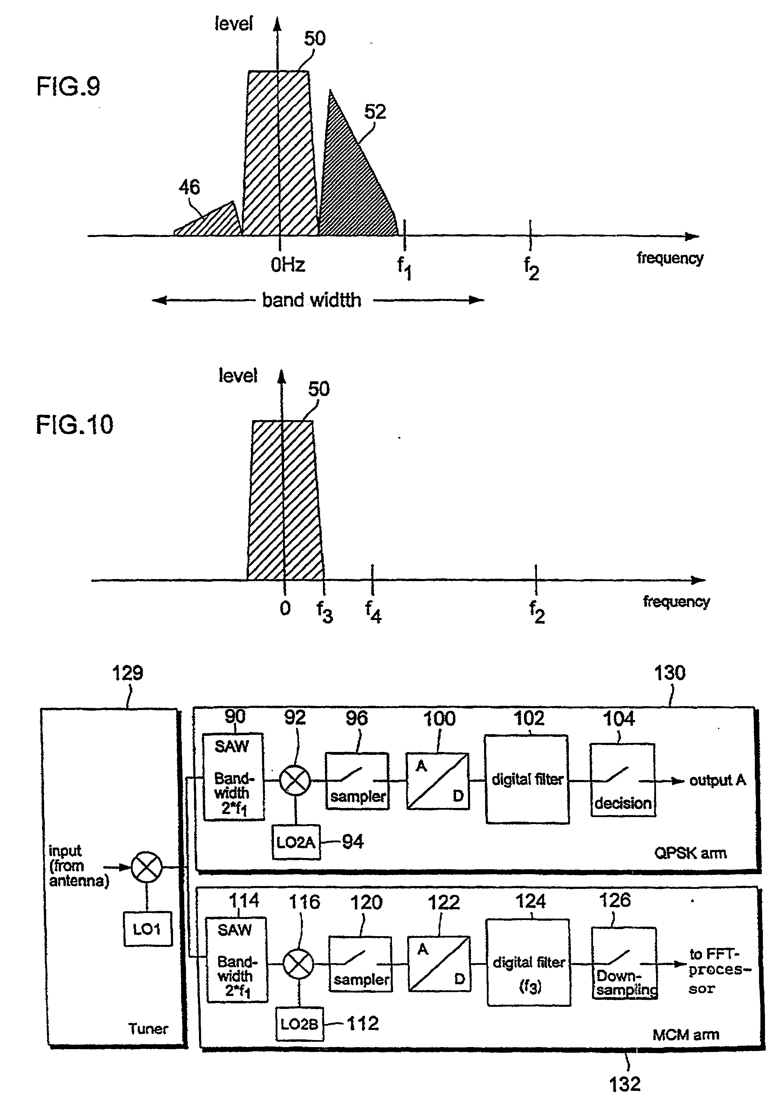

An MCM demodulator is depicted in Fig. 8. For MCM demodulation, an FFT is used to implement the filter bank at the radio receiver and corresponds to the IFFT described above in connection with MCM modulation at the terrestrial repeater. The input of the FFT as depicted in Fig. 8 is sampled in accordance with a number of parameters selected for MCM transmission. The sampling frequency depends on an MCM symbol frequency Fₛ which corresponds to the number of MCM symbols transmitted per second from the terrestrial repeater. In addition, the sampling frequency depends on the length of the FFT and the length of the guard interval associated with each MCM symbol. The sampling frequency is preferably F₄ = Fₛ * FFTLEN * (1 + GUARDLEN_REL), where FFTLEN corresponds to the length of the FFT (e.g., 512), GUARDLEN_REL corresponds to the length of the guard interval relative to the useful length or symbol duration (e.g., 280 microseconds), and Fₛ corresponds to the MCM symbol frequency. The MCM symbol frequency Fₛ is the bit rate divided by the number of bits per MCM symbol. As an example, the MCM signal bit rate may be 3.067 megabits per second (Mbps) and the number of bits per symbol may be 864 or 432.

With continued reference to Fig. 8, an MCM signal of approximately 2.3 GHz is received at a radio receiver via an antenna 106 and a low noise amplifier (LNA) 108, and is downconverted to an IF of approximately 135 MHz by a mixer 110 and a local oscillator 112 before being processed by a SAW filter 114. The signal is band-limited by the SAW filter 114 to avoid aliasing components. The sampling frequency in the bandwidth of the SAW filter fulfills the Nyquist criterion for sampling signals. The received MCM signal is then downconverted to a second IF of approximately 4.60 MHz using a second mixer 116 and a second local oscillator 118. The signal is sampled by a sampler 120 at a frequency higher than the bandwidth of the signal, that is, at a sampling frequency F₂> = 2 * F₁. The required sampling frequency is high in comparison with the bandwidth of the desired terrestrial signal (e.g., 4 times higher than the bandwidth of the desired signal) as shown in Fig. 9. Following A/D conversion in block 122, a digital filter 124 is used to suppress the adjacent channels. The digital filter 124 can be a low pass filter, as opposed to a bandpass filter, since the level of the adjacent satellite channel 46 is significantly lower than the terrestrial signal 50 (i.e., on the order of 30 dB lower). The adjacent satellite channel 46 merely appears as noise after A/D conversion and downsampling. The resulting spectrum after digital low pass filtering is shown in Fig. 10. The bandwidth is now equivalent to F₃. The signal is then subjected to downsampling so as to be represented by a lower sampling frequency F₄ ≥ 2 * F₃. The frequencies F₂ and F₄ are selected such that F₄ is equal to N * F₂ where N is an integer number such as 4.

The output of the digital low pass filter 124 after downsampling in block 126 is provided to the FFT as part of the MCM demodulation process, as shown in Fig. 8. Samples are converted to a vector by serial-to-parallel conversation and are then transformed into the frequency domain by the FFT prior to being decoded via an inverse mapping process. The mapping process converts the output of the FFT in the form of a data vector with complex values into an output bit stream.

### Dual-Mode Receiver

QPSK modulation is an efficient method for satellite broadcasting, while MCM modulation is useful for terrestrial broadcasting. For systems utilizing satellite broadcasting for rural and suburban areas and terrestrial broadcasting for urban centers in which satellite signals are blocked by high buildings, for example, combined receivers are needed to receive both satellite signals and terrestrial signals. One possible dual-mode receiver is depicted in Fig. 11. This dual-mode receiver can be used as the satellite/terrestrial arm 56 in the radio receiver 14 of Fig. 1. If the satellite signal and terrestrial signal use the same frequency, a common tuner 129 can be used. The QPSK arm 130 and the MCM arm 132 of the dual-mode receiver can be identical to the QPSK demodulator and the MCM demodulator described above in connection with Figs. 5 and 8, respectively.

In accordance with a preferred embodiment of the present invention, a dual-mode receiver for implementing, for example, the satellite/terrestrial arm of a radio receiver, is implemented using a combined architecture for both QPSK and MCM demodulation. The common architecture is depicted in Fig. 12. The dual-mode receiver depicted in Fig. 12 is advantageous because it employs only one SAW filter and only one digital filter, and therefore reduces the cost and complexity of the receiver compared to that depicted in Fig. 11.

With continued reference to Fig. 12, an antenna 134 and LNA 136 are provided to receive satellite and terrestrial signals which are preferably in the frequency range of 2.332 to 2.345 GHz. The received satellite and terrestrial signals are supplied to the same SAW filter 132, which is preferably a weak or "leaky" SAW filter. As stated previously, a weak SAW filter is preferred to a strong SAW filter having better adjacent channel suppression, since the strong SAW filter can introduce phase distortion and is also more expensive to implement. As shown in Fig. 6, the passband of the weak SAW filter attenuates the terrestrial signal in the adjacent channel by only about 6 dB. This partial suppression of the adjacent channel is advantageous in that it allows for the detection of the terrestrial signal. The dual-mode receiver is configured to select a received terrestrial signal for receiver output over a received satellite signal whenever the terrestrial signal exceeds a predetermined threshold. Thus, the dual-mode receiver searches essentially constantly for a terrestrial signal and selects the satellite signal only when the terrestrial signal is not present.

In the illustrated embodiment, a super-heterodyne phase locked loop (PLL) 139 for selectively tuning two voltage controlled local oscillators 140 and 142 together with corresponding mixers 144 and 146 is provided for downconverting the QPSK and MCM signals to the two different second IFs (i.e., 3.68 and 4.60 MHz, respectively) as described above in connection with Figs. 5 and 8. For example, both oscillators 140 and 142 can be locked to one reference oscillator of 14.72 MHz, and a phase comparator frequency of 230 kHz can be used. In mixer 144, the satellite and terrestrial signals, which have different frequency bands, are mixed with different local oscillator input frequencies to downconvert the signals to the same IF of approximately 135 MHz. For example, the mixer input frequencies are F_{LOI} is Fₜₑᵣᵣ - F_{IF} for terrestrial signals and Fₜₑᵣᵣ - 2.07 MHz - F_{IF} for satellite signals.

With regard to mixer 146, the sampling frequency is different depending on whether the receiver is using terrestrial signals or satellite signals for receiver output. The mixer 146 is preferably re-tuned to achieve a second IF which is one-fourth of the used sampling frequency. The used sampling frequency is preferably an integer multiple of 2.3 MHz for MCM terrestrial signals and an integer multiple of 1.84 MHz for QPSK/TDM satellite signals. Accordingly, re-tuning the mixer 146 facilitates simplification of I/Q generation. Feedback data from a terrestrial detection circuit described below is provided to the super-heterodyne PLL circuit 139 to control the operation of the local oscillators 140 and 142 depending upon whether sufficiently strong terrestrial signals have been detected and are being used for receiver output in lieu of satellite signals.

The digital filter 148 of Fig. 12 is implemented such that the frequency response of the matched filter (e.g., the RRC filter described above in connection with Figs. 5 and 7) required for QPSK demodulation also fulfills the requirements of the digital filter used prior to downsampling of an MCM signal (e.g., at a sampling frequency F₄ = N * 2.3 MHz where N=8) for FFT processing. When the receiver is initially powered on, the receiver configures the local oscillators 140 and 142 for downconversion of satellite signals to a second IF of 3.68 MHz. The sampling and A/D conversion of the satellite signals in blocks 150 and 152 is as described previously. For an RRC filter, a sampling rate of four times the IF (or eight times the symbol rate) is used. The passband of the RRC filter is such that the filter will not pass the energy of an adjacent terrestrial signal. If a terrestrial signal of sufficient energy is present in the channel 50 adjacent to the satellite signal passed by the SAW filter, a difference in signal energy can be detected between the input and the output of the RRC filter. This is implemented by means of a terrestrial signal detector 154 in Fig. 12. The terrestrial signal detector 154 compares the signal energy at the input of the filter with the signal energy at the output of the filter. If the energy at the input of the filter is significantly higher than at the filter output (e.g., on the order of three times higher, depending on the SAW filter frequency response), a terrestrial signal is assumed to have been received.

If a terrestrial signal is present in the adjacent channel, a signal is produced by the terrestrial signal detector 154 which retunes the local oscillators 144 and 146 to downconvert terrestrial signals. Thus, the center frequency of the terrestrial signal is shifted by approximately 2.07 MHz and the second IF becomes 4.60 MHz. Following sampling and A/D conversion, the terrestrial signal is applied to the RRC-type digital filter 148. Since the roll-off frequency of the digital filter 148 is selected to fulfill the requirements of both QPSK and MCM demodulation and the terrestrial and satellite signals have similar bandwidth, the digital filter passes the MCM terrestrial signal to block 156 for downsampling prior to FFT processing in block 158. The output of the digital filter 148 is also supplied to a sampling switch and latch device 160 to :recover a TDM signal from the QPSK modulation performed at the broadcast station. A switch 162 is then used to select an output signal from either the sampling switch and latch device 160 or the FFT 158 for further processing via a TDM demultiplexing and decoding circuit 164 and the post-detection diversity combining unit 58 (Fig. 4). The operation of the switch 162 is controlled by the terrestrial signal detector 154.

Thus, the location of the terrestrial repeater frequency bands 50 and 52 in the lower part of the frequency plan (Fig. 3), adjacent to the frequency bands 46 and 48 of the satellite signals, facilitates selection of satellite signals or the terrestrial signals for receiver output. Since a portion of an adjacent terrestrial signal remains in the output of the SAW filter during satellite signal reception, a comparison of signal power can be used to detect the terrestrial signal.

While a certain advantageous embodiment has been chosen to illustrate the invention, it will be understood by those skilled in the art that various changes and modifications can be made therein without departing from the scope of the invention as defined in the appended claims.

## Claims

1. A receiver configured to receive broadcast signals of both a first signal type and a second signal type and to select broadcast signals of one of the signal types for output, said receiver comprising:
a first oscillator and mixer circuit (140,144) for downconverting said broadcast signals of both said first signal type and said second signal type to a first intermediate frequency;
a first filter (138) having a center frequency corresponding to said first intermediate frequency and frequency response selected to pass said broadcast signals of said first signal type and at least a portion of said broadcast signals of said second signal type;
a second oscillator and mixer circuit (142, 146) for downconverting said broadcast signals of said first signal type and said broadcast signals of said second signal type to a second intermediate frequency;
a sampling and analog-to-digital conversion circuit (150, 152) for converting said broadcast signals of said first signal type and said broadcast signals of said second signal type into digital signals;
a second filter (148) connected to the output of said sampling and analog-to-digital conversion circuit (150,152) for filtering said digital signals, said digital signals generated from said broadcast signals of said first signal type being phase shift keying or PSK-modulated, and said digital signals generated from said broadcast signals of said second signal type being modulated in accordance with a second modulation scheme different from PSK modulation;
a signal detection circuit (154) connected to said second filter (148) for determining whether a characteristic of said second signal type exceeds a predetermined threshold and for generating an output signal for controlling the operation of said first oscillator and mixer circuit (140, 144), said first oscillator and mixer circuit (140, 144) being configured to use one of first and second input frequencies, depending on said output signal, to generate said first intermediate frequency by mixing with said broadcast signals;
a first signal demodulation device (160) connected to said second filter (148) to process said first signal type;
a second signal demodulation device (156, 158) connected to said second filter to process said second signal type; and
a switching device (162) to select the output of one of said first signal demodulation device (160) and said second signal demodulation device (156, 158) in accordance with said output signal from said signal detection device.

2. A receiver as claimed in claim 1, wherein a third filter is used when generating said broadcast signals of said first signal type, said second filter (148) being configured to have a frequency response of a matched filter corresponding to said third filter.

3. A receiver as claimed in claim 1, said second modulation scheme is multicarrier modulation or MCM, and said second filter (148) is configured to have a frequency response to facilitate MCM and PSK demodulation.

4. A receiver as claimed in claim 3, wherein said frequency response accommodates a sampling frequency for MCM demodulation corresponding to at least one of the length of a fast Fourier transform for MCM demodulation and the length of a guard interval used during MCM modulation.

5. A receiver as claimed in claim 1, wherein said second signal type is a multicarrier modulated signal that is demodulated using downsampling and fast Fourier transform processing, said second filter (148) being configured perform in accordance with filter parameters selected to facilitate said downsampling and said fast Fourier transform processing of said second signal type and PSK demodulation of said first signal type.

6. A receiver as claimed in claim 1, wherein said second filter (148) is a root-raised cosine filter having a frequency response selected to facilitate demodulation of both said first signal type and said second signal type.

7. A receiver as claimed in claim 8, wherein said second filter (148) is a matched filter configured to substantially correspond to a third filter located at a broadcast station which produced said first signal type.

8. A receiver as claimed in claim 1, wherein said first filter (138) is a leaky filter selected from the group consisting of a surface acoustic wave filter and a ceramic filter.

9. A receiver as claimed in claim 1, wherein said second signal type is **characterized by** a higher signal level than said first signal type, said signal detection circuit (154) being configured to determine the difference in the signal level of said second signal type at the input and the output of said second filter (148).

10. A receiver as claimed in claim 1, further comprising a signal detection circuit (154) connected to said second filter for determining whether a characteristic of said second signal type exceeds a predetermined threshold and for generating an output signal for controlling the operation of said second oscillator and mixer circuit (142, 146) to control said second oscillator and mixer circuit (142, 146) to perform downconversion using said third intermediate frequency if said predetermined threshold is exceeded.

11. A method of receiving and selecting from broadcast signals transmitted in first and second frequency channels comprising the steps of:
receiving signals at a carrier frequency;
downconverting said received signals to a first intermediate frequency using one of a first and second input frequencies depending on whether the broadcast signals in said second fequency channel exceed a predetermined threshold;
filtering said received signals to pass said broadcast signals in both said first and second frequency channels;
downconverting said broadcast signals in said first frequency channel and said second frequency channel to a second intermediate frequency;
sampling and converting said broadcast signals into digital signals;
filtering said digital signals, wherein said digital signals generated from said first frequency channel are phase shift keying or PSK-modulated and said filtering is implemented using a root-raised-cosine filter to facilitate PSK demodulation, and said digital signals generated from said second frequency channel are modulated in accordance with a second modulation scheme different from PSK modulation and said filtering thereof is implemented using said root-raised-cosine filter;
demodulating said filtered digital signals generated from said first frequency channel and demodulating said filtered signals generated from said second frequency channel; and
selecting said demodulated signals generated from said first frequency channel or said demodulated signals generated from said second frequency channel depending on whether the broadcast signals in said second frequency channel exceed a predetermined threshold.

12. A method as claimed in claim 11, wherein said filtering step comprises the step of selecting said root-raised-cosine filter to have a frequency response of a matched filter corresponding to a third filter used to generate said broadcast signals on said first frequency channel.

13. A method as claimed in claim 11, wherein said second modulation scheme is multicarrier modulation or MCM, and said providing step comprises the step of selecting said frequency response to facilitate MCM demodulation.

14. A method as claimed in claim 13, wherein said selecting step comprises the step of selecting said frequency response in accordance with a sampling frequency for MCM demodulation, said sampling frequency corresponding to at least one of the length of a fast Fourier transform used for MCM demodulation and the length of a guard interval used during MCM modulation.

15. A method as claimed in claim 11, wherein said broadcast signals in said second frequency channel having a higher signal level than said broadcast signals in said first frequency channel, and further comprising the steps of:
comparing the signal level of said digital signals before and after said filtering step to determine if a characteristic of said broadcast signals in said second frequency channel exceeds a predetermined threshold;
generating a detection signal indicating whether said broadcast signals in said second frequency channel have been detected; and
adjusting the input frequency to a local oscillator in accordance with said detection signal to downconvert said received signals to said first intermediate frequency by mixing with said received signals in said first and second frequency channels.

## Patentansprüche

1. Ein Empfänger, der konfiguriert ist, um Übertragungssignale sowohl eines ersten Signaltyps als auch eines zweiten Signaltyps zu empfangen, und um Übertragungssignale eines der Signaltypen zur Ausgabe auszuwählen, wobei der Empfänger folgende Merkmale aufweist:
eine erste Oszillator- und Mischerschaltung (140, 144) zum Abwärtsumsetzen der Übertragungssignale des ersten Signaltyps und des zweiten Signaltyps zu einer ersten Zwischenfrequenz;
ein erstes Filter (138) mit einer Mittenfrequenz, die der ersten Zwischenfrequenz entspricht, und einer Frequenzantwort, die ausgewählt ist, um die Übertragungssignale des ersten Signaltyps und zumindest einen Abschnitt der Übertragungssignale des zweiten Signaltyps weiterzuleiten;
eine zweite Oszillator- und Mischerschaltung (142, 146) zum Abwärtsumsetzen der Übertragungssignale des ersten Signaltyps und der Übertragungssignale des zweiten Signaltyps zu einer zweiten Zwischenfrequenz;
eine Abtast- und Analog-zu-Digital-Umwandlungs-Schaltung (150, 152) zum Umwandeln der Übertragungssignale des ersten Signaltyps und der Übertragungssignale des zweiten Signaltyps in digitale Signale;
ein zweites Filter (148), das mit dem Ausgang der Abtast- und Analog-zu-Digital-Umwandlungs-Schaltung (150, 152) verbunden ist, zum Filtern der digitalen Signale, wobei die digitalen Signale, die von den Übertragungssignalen des ersten Signaltyps erzeugt werden, phasenumgetastet oder PSK-moduliert werden, und wobei die digitalen Signale, die von den Übertragungssignalen des zweiten Signaltyps erzeugt werden, gemäß einem zweiten Modulationsschema moduliert werden, das sich von der PSK-Modulation unterscheidet;
eine Signalerfassungsschaltung (154), die mit dem zweiten Filter (148) verbunden ist, zum Bestimmen, ob eine Charakteristik des zweiten Signaltyps eine vorbestimmte Schwelle überschreitet, und zum Erzeugen eines Ausgangssignals zum Steuern der Operation der ersten Oszillator- und Mischer-Schaltung (140, 144), wobei die erste Oszillator- und Mischer-Schaltung (140, 144) konfiguriert ist, um die erste oder die zweite Eingangsfrequenz abhängig von dem Ausgangssignal zu verwenden, um die erste Zwischenfrequenz durch ein Mischen mit den Übertragungssignalen zu erzeugen;
eine erste Signaldemodulationsvorrichtung (160), die mit dem zweiten Filter (148) verbunden ist, um den ersten Signaltyp zu verarbeiten;
eine zweite Signaldemodulationsvorrichtung (156, 158), die mit dem zweiten Filter verbunden ist, um den zweiten Signaltyp zu verarbeiten; und
eine Schaltvorrichtung (162), um den Ausgang der ersten Signaldemodulationsvorrichtung (160) oder der zweiten Signaldemodulationsvorrichtung (156, 158) gemäß dem Ausgangssignal von der Signalerfassungsvorrichtung auszuwählen.

2. Ein Empfänger gemäß Anspruch 1, bei dem ein drittes Filter verwendet wird, wenn die Übertragungssignale des ersten Signaltyps erzeugt werden, wobei das zweite Filter (148) konfiguriert ist, um eine Frequenzantwort eines angepaßten Filters entsprechend dem dritten Filter aufzuweisen.

3. Ein Empfänger gemäß Anspruch 1, wobei das zweite Modulationsschema eine Mehrträgermodulation oder MCM ist, und wobei das zweite Filter (148) konfiguriert ist, um eine Frequenzantwort aufzuweisen, um eine MCM- und eine PSK-Demodulation zu erleichtern.

4. Ein Empfänger gemäß Anspruch 3, bei dem die Frequenzantwort eine Abtastfrequenz zur MCM-Demodulation aufnimmt, die zumindest entweder der Länge einer schnellen Fourier-Transformation zur MCM-Demodulation oder der Länge eines Schutzintervalls entspricht, das während der MCM-Modulation verwendet wird.

5. Ein Empfänger gemäß Anspruch 1, bei dem der zweite Signaltyp ein mehrträgermoduliertes Signal ist, das unter Verwendung eines Abwärtsabtastens und eines schnellen Fourier-Transformationsverarbeitens demoduliert wird, wobei das zweite Filter (148) konfiguriert ist, um gemäß Filterparametern zu arbeiten, die ausgewählt sind, um das Abwärtsabtasten und das schnelle Fourier-Transformationsverarbeiten des zweiten Signaltyps und die PSK-Demodulation des ersten Signaltyps zu erleichtern.

6. Ein Empfänger gemäß Anspruch 1, bei dem das zweite Filter (148) ein Wurzel-Erhöht-Kosinus-Filter mit einer Frequenzantwort ist, die ausgewählt ist, um eine Demodulation des ersten Signaltyps und des zweiten Signaltyps zu erleichtern.

7. Ein Empfänger gemäß Anspruch 8, bei dem das zweite Filter (148) ein angepaßtes Filter ist, das konfiguriert ist, um im wesentlichen einem dritten Filter zu entsprechen, das sich an einer Übertragungsstation befindet, die den ersten Signaltyp erzeugt.

8. Ein Empfänger gemäß Anspruch 1, bei dem das erste Filter (138) ein verlustbehaftetes Filter ist, das aus der Gruppe ausgewählt wird, die aus einem Oberflächenwellenfilter und einem Keramikfilter besteht.

9. Ein Empfänger gemäß Anspruch 1, bei dem der zweite Signaltyp durch einen höheren Signalpegel als der erste Signaltyp charakterisiert ist, wobei die Signalerfassungsschaltung (154) konfiguriert ist, um die Differenz des Signalpegels des zweiten Signaltyps an dem Eingang und dem Ausgang des zweiten Filters (148) zu bestimmen.

10. Ein Empfänger gemäß Anspruch 1, der ferner eine Signalerfassungsschaltung (154), die mit dem zweiten Filter verbunden ist, zum Bestimmen, ob eine Charakteristik des zweiten Signaltyps eine vorbestimmte Schwelle übersteigt, und zum Erzeugen eines Ausgangssignals zum Steuern der Operation der zweiten Oszillator- und Mischerschaltung (142, 146) aufweist, um die zweite Oszillator- und Mischerschaltung (142, 146) zu steuern, um eine Abwärtsumsetzung unter Verwendung der dritten Zwischenfrequenz durchzuführen, wenn die vorbestimmte Schwelle überschritten wird.

11. Ein Verfahren zum Empfangen und Auswählen von Übertragungssignalen, die in einem ersten und einem zweiten Frequenzkanal gesendet werden, wobei das Verfahren folgende Schritte aufweist:
Empfangen von Signalen bei einer Trägerfrequenz;
Abwärtsumsetzen der empfangenen Signale zu einer ersten Zwischenfrequenz unter Verwendung einer ersten oder einer zweiten Eingangsfrequenz, abhängig davon, ob die Übertragungssignale in dem zweiten Frequenzkanal eine vorbestimmte Schwelle überschreiten;
Filtern der empfangenen Signale, um die Übertragungssignale in dem ersten und dem zweiten Frequenzkanal weiterzuleiten;
Abwärtsumsetzen der Übertragungssignale in dem ersten Frequenzkanal und dem zweiten Frequenzkanal zu einer zweiten Zwischenfrequenz;
Abtasten und Umwandeln der Übertragungssignale in digitale Signale;
Filtern der digitalen Signale, wobei die digitalen Signale, die von dem ersten Frequenzkanal erzeugt werden, phasenumgetastet oder PSK-moduliert werden, und wobei das Filtern unter Verwendung eines Wurzel-Erhöht-Kosinus-Filters implementiert ist, um eine PSK-Demodulation zu erleichtern, wobei die digitalen Signale, die von dem zweiten Frequenzkanal erzeugt werden, gemäß einem zweiten Modulationsschema moduliert werden, das sich von einer PSK-Modulation unterscheidet, und wobei das Filtern derselben unter Verwendung des Wurzel-Erhöht-Kosinus-Filters implementiert ist;
Demodulieren der gefilterten digitalen Signale, die von dem ersten Frequenzkanal erzeugt werden, und Demodulieren der gefilterten Signale, die von dem zweiten Frequenzkanal erzeugt werden; und
Auswählen der demodulierten Signale, die von dem ersten Frequenzkanal erzeugt werden, oder der demodulierten Signale, die von dem zweiten Frequenzkanal erzeugt werden, abhängig davon, ob die Übertragungssignale in dem zweiten Frequenzkanal eine vorbestimmte Schwelle überschreiten.

12. Ein Verfahren gemäß Anspruch 11, bei dem der Filterschritt den Schritt des Auswählens des Wurzel-Erhöht-Kosinus-Filters aufweist, um eine Frequenzantwort eines angepaßten Filters aufzuweisen, das einem dritten Filter entspricht, das verwendet wird, um die Übertragungssignale auf dem ersten Frequenzkanal zu erzeugen.

13. Ein Verfahren gemäß Anspruch 11, bei dem das zweite Modulationsschema eine Mehrträgermodulation oder MCM ist, und wobei der Bereitstellen-Schritt den Schritt des Auswählens der Frequenzantwort aufweist, um einen MCM-Demodulation zu erleichtern.

14. Ein Verfahren gemäß Anspruch 13, bei dem der Auswahlschritt den Schritt des Auswählens der Frequenzantwort gemäß einer Abtastfrequenz zur MCM-Demodulation aufweist, wobei die Abtastfrequenz zumindest entweder der Länge einer schnellen Fourier-Transformation, die für die MCM-Demodulation verwendet wird, oder der Länge eines Schutzintervalls entspricht, das während der MCM-Modulation verwendet wird.

15. Ein Verfahren gemäß Anspruch 11, bei dem die Übertragungssignale in dem zweiten Frequenzkanal einen höheren Signalpegel als die Übertragungssignale in dem ersten Frequenzkanal aufweisen, wobei das Verfahren ferner folgende Schritte aufweist:
Vergleichen des Signalpegels der digitalen Signale vor und nach dem Filterschritt, um zu bestimmen, ob eine Charakteristik der Übertragungssignale in dem zweiten Frequenzkanal eine vorbestimmte Schwelle überschreitet;
Erzeugen eines Erfassungssignals, das anzeigt, ob die Übertragungssignale in dem zweiten Frequenzkanal erfaßt wurden; und
Einstellen der Eingangsfrequenz in einen Lokaloszillator gemäß dem Erfassungssignal, um die empfangenen Signale zu der ersten Zwischenfrequenz durch ein Mischen mit den empfangenen Signalen in dem ersten und dem zweiten Frequenzkanal abwärts umzusetzen.

## Revendications

1. Récepteur configuré pour recevoir des signaux de radiodiffusion tant d'un premier type de signaux que d'un second type de signaux et pour sélectionner des signaux de radiodiffusion de l'un des types de signaux pour la sortie, ledit récepteur comprenant :
un premier circuit oscillateur et mélangeur (140, 144) destiné à descendre en fréquence lesdits signaux de radiodiffusion tant dudit premier type de signaux que dudit second type de signaux à une première fréquence intermédiaire ;
un premier filtre (138) ayant une fréquence centrale correspondant à ladite première fréquence intermédiaire et une réponse de fréquence choisie pour laisser passer lesdits signaux de radiodiffusion dudit premier type de signaux et au moins une partie desdits signaux de radiodiffusion dudit second type de signaux;
un second circuit oscillateur et mélangeur (142, 146) destiné à descendre en fréquence lesdits signaux de radiodiffusion dudit premier type de signaux et lesdits signaux de radiodiffusion dudit second type de signaux à une seconde fréquence intermédiaire ;
un circuit d'échantillonnage et de conversion analogique-numérique (150, 152) destiné à convertir lesdits signaux de radiodiffusion dudit premier type de signaux et lesdits signaux de radiodiffusion dudit second type de signaux en signaux numériques;
un second filtre (148), relié à la sortie dudit circuit d'échantillonnage et de conversion analogique-numérique (150, 152), destiné à filtrer lesdits signaux numériques, lesdits signaux numériques générés à partir desdits signaux de radiodiffusion dudit premier type de signaux étant modulés par déplacement de phase ou MPD, et lesdits signaux générés à partir desdits signaux de radiodiffusion dudit second type de signaux étant modulés selon un second schéma de modulation différent de la modulation MPD ;
un circuit de détection de signal (154), relié audit second filtre (148), destiné à déterminer si une caractéristique dudit second type de signaux excède ou non un seuil prédéterminé et à générer un signal de sortie pour commander le fonctionnement dudit premier circuit oscillateur et mélangeur (140, 144), ledit premier circuit oscillateur et mélangeur (140, 144) étant configuré de manière à utiliser l'une parmi la première et la seconde fréquence d'entrée, en fonction dudit signal de sortie, pour générer ladite fréquence intermédiaire par mélange avec lesdits signaux de radiodiffusion ;
un premier dispositif de démodulation de signaux (160), relié audit second filtre (148), destiné à traiter ledit premier type de signaux ;
un second dispositif de démodulation de signaux (156, 158), relié audit second filtre, destiné à traiter ledit second type de signaux ; et
un dispositif de commutation (162) destiné à sélectionner la sortie de l'un parmi ledit premier dispositif de démodulation de signaux (160) et ledit second dispositif de démodulation de signaux (156, 158), selon ledit signal de sortie dudit dispositif de détection de signaux.

2. Récepteur suivant la revendication 1, dans lequel il est utilisé un troisième filtre lors de la génération desdits signaux de radiodiffusion dudit premier type de signaux, ledit second filtre (148) étant configuré de manière à présenter une réponse de fréquence d'un filtre adapté correspondant audit troisième filtre.

3. Récepteur suivant la revendication 1, dans lequel ledit second schéma de modulation est une modulation à plusieurs porteuses ou MPP, et ledit second filtre (148) est configuré de manière à présenter une réponse de fréquence pour faciliter la démodulation MPP et MDP.

4. Récepteur suivant la revendication 3, dans lequel ladite réponse de fréquence est adaptée à une fréquence d'échantillonnage pour démodulation MPP correspondant à au moins l'une parmi la longueur d'une transformée de Fourier rapide pour démodulation MPP et la longueur d'un intervalle de sécurité utilisé pendant la modulation MPP.

5. Récepteur suivant la revendication 1, dans lequel ledit second type de signaux est un signal modulé à plusieurs porteuses qui est démodulé à l'aide d'un échantillonnage à descente en fréquence et d'un traitement par transformée de Fourier rapide, ledit second filtre (148) étant configuré de manière à fonctionner selon des paramètres de filtre sélectionnés de manière à faciliter ledit échantillonnage à descente en fréquence et ledit traitement par transformée de Fourier rapide dudit second type de signaux et la démodulation MDP dudit premier type de signaux.

6. Récepteur suivant la revendication 1, dans lequel ledit second filtre (148) est un filtre en cosinus carré surélevé présentant une réponse de fréquence choisie de manière à faciliter la démodulation tant dudit premier type de signaux que dudit second type de signaux.

7. Récepteur suivant la revendication 8, dans lequel ledit second filtre (148) est un filtre adapté configuré de manière à correspondre sensiblement à un troisième filtre situé à une station de radiodiffusion qui a produit ledit premier type de signaux.

8. Récepteur suivant la revendication 1, dans lequel ledit premier filtre (138) est un filtre à fuite choisi parmi le groupe composé d'un filtre d'onde acoustique de surface et d'un filtre en céramique.

9. Récepteur suivant la revendication 1, dans lequel ledit second type de signaux est **caractérisé par** un niveau de signal supérieur audit premier type de signal, ledit circuit de détection de signaux (154) étant configuré de manière à déterminer la différence de niveau de signal dudit second type de signaux à l'entrée et à la sortie dudit second filtre (148).

10. Récepteur suivant la revendication 1, comprenant, par ailleurs, un circuit de détection de signaux (154), relié audit second filtre, destiné à déterminer si une caractéristique dudit second type de signaux excède ou non un seuil prédéterminé et à générer un signal de sortie pour commander le fonctionnement dudit second circuit oscillateur et mélangeur (142, 146) pour commander ledit second circuit oscillateur et mélangeur (142, 146), pour réaliser la descente en fréquence à l'aide de ladite troisième fréquence intermédiaire si ledit seuil prédéterminé est excédé.

11. Procédé pour recevoir et sélectionner parmi des signaux de radiodiffusion transmis dans un premier et un second canal de fréquence, comprenant les étapes consistant à :
recevoir des signaux à une fréquence de porteuse ;
descendre en fréquence lesdits signaux reçus à une première fréquence intermédiaire à l'aide de l'une parmi une première et une seconde fréquence de sortie selon que les signaux de radiodiffusion dans ledit second canal de fréquence excèdent ou non un seuil prédéterminé ;
filtrer lesdits signaux reçus, pour laisser passer lesdits signaux de radiodiffusion tant dans le premier que dans le second canal de fréquence ;
descendre en fréquence lesdits signaux de radiodiffusion dans ledit premier canal de fréquence et ledit second canal de fréquence à une seconde fréquence intermédiaire ;
échantillonner et convertir lesdits signaux de radiodiffusion en signaux numériques ;
filtrer lesdits signaux numériques, dans lequel lesdits signaux numériques générés à partir dudit premier canal de fréquence sont modulés par déplacement de phase ou MDP et ladite filtration est réalisée à l'aide d'un filtre en cosinus carré surélevé, pour faciliter la démodulation MDP, et lesdits signaux numériques générés à partir dudit second canal de fréquence sont modulés par un second schéma de modulation différent de la modulation MDP et leur dite filtration est réalisée à l'aide dudit filtre en cosinus carré surélevé ;
démoduler lesdits signaux numériques filtrés générés à partir dudit premier canal de fréquence et démoduler lesdits signaux filtrés générés à partir dudit second canal de fréquence ; et
sélectionner lesdits signaux démodulés générés à partir dudit premier canal de fréquence ou lesdits signaux démodulés générés à partir dudit second canal de fréquence selon que les signaux de radiodiffusion dans ledit second canal de fréquence excèdent ou non un seuil prédéterminé.

12. Procédé suivant la revendication 11, dans lequel ladite étape de filtration comprend l'étape consistant à sélectionner ledit filtre en cosinus carré surélevé de manière à présenter une réponse de fréquence d'un filtre adapté correspondant à un troisième filtre utilisé pour générer lesdits signaux de radiodiffusion sur ledit premier canal de fréquence.

13. Procédé suivant la revendication 11, dans lequel ledit second schéma de modulation est une modulation à plusieurs porteuses ou MPP, et ladite étape de prévision comprend l'étape consistant à sélectionner ladite réponse de fréquence de manière à faciliter la démodulation MPP.

14. Procédé suivant la revendication 13, dans lequel ladite étape de sélection comprend l'étape consistant à sélectionner ladite réponse de fréquence conformément à une fréquence d'échantillonnage pour la démodulation MPP, ladite fréquence d'échantillonnage correspondant à au moins l'une parmi la longueur d'une transformée de Fourier rapide utilisée pour la démodulation MPP et la longueur d'un intervalle de sécurité utilisé pendant la modulation MPP.

15. Procédé suivant la revendication 11, dans lequel lesdits signaux de radiodiffusion dans ledit second canal de fréquence ont un niveau de signal plus élevé que lesdits signaux de radiodiffusion dans ledit premier canal de fréquence, et comprenant, par ailleurs, les étapes consistant à :
comparer le niveau de signal desdits signaux numériques avant et après ladite étape de filtration, pour déterminer si une caractéristique desdits signaux de radiodiffusion dans ledit second canal de fréquence excède ou non un seuil prédéterminé ;
générer un signal de détection indiquant si lesdits signaux de radiodiffusion dans ledit second canal de fréquence ont été détectés ; et
ajuster la fréquence d'entrée à un oscillateur local en fonction dudit signal de détection, pour descendre en fréquence lesdits signaux reçus à ladite première fréquence intermédiaire par mélange avec lesdits signaux reçus dans lesdits premier et second canaux de fréquence.
